# EUROPEAN PATENT APPLICATION

(11) **EP 4 468 134 A1**
(43) Date of publication of application: **27.11.2024**
(21) Application number: 22921605.6
(22) Date of filing: 09.11.2022
(51) Int. Cl.: G06F 3/0482, G06F 3/04842, G06F 16/242

(54) **USER INTERFACE CONTROL METHOD, MONITORING SYSTEM, DEVICE AND STORAGE MEDIUM**

(30) Priority: 18.01.2022 CN 202210054716
(71) Applicant: Guanghou Ehang Intelligent Technology Co., Ltd., Guangzhou, Guangdong 510000 (CN)
(72) Inventor: HU, Huazhi, Guangzhou, Guangdong 510000 (CN); GUO, Shangjin, Guangzhou, Guangdong 510000 (CN)
(74) Representative: Zaboliene, Reda
(86) International application number: PCT/CN2022/130985
(87) International publication number: WO 2023/138181

(57) **Abstract**

The present application discloses a user interface control method, monitoring system, device, and storage medium. The method comprises: displaying a first user interface of an application (S11), where a monitored aircraft list is displayed in the first region of the first user interface, and information of one aircraft in the aircraft list is displayed in the second region of the first user interface; receiving a first selection operation from a user in the aircraft list (S12); and responding to the first selection operation, updating the second region to display information of the an aircraft selected by the user (S13). By displaying the aircraft list and information of one aircraft in different regions of the user interface, in the present application, when the selection operation from the user in the aircraft list is received, the update can be synchronized.

## Description

### Technical Field

The present application relates to the field of aircraft technology, and in particular to a user interface display method, monitoring system, device and storage medium.

### Background

With the development of aircraft technology and the growth in aircraft ownership, the threats posed by aircraft flights to national defense security and public safety are continually increasing. Consequently, more and more aircraft control systems have been developed and applied to enhance the effective management of aircraft, with aircraft monitoring being a fundamental functional requirement.

The issue with existing aircraft monitoring systems lies in the poor human-computer interaction experience and the inability to obtain specific information about the aircraft in a monitored state.

### Summary

### Technical Problem

To address the issues of poor human-computer interaction experience and the inability to obtain the specific information about the aircraft in the monitored state, the present application proposes a user interface display method, monitoring system, device, and storage medium.

### Solution to the Issue

### Technical Solution

An aspect of an embodiment of the present application provides a user interface control method, provided for an aircraft monitoring system, the method includes:
displaying a first user interface of an application, where a monitored aircraft list is displayed in a first region of the first user interface, and information of one aircraft in the aircraft list is displayed in a second region of the first user interface;
receiving a first selection operation from a user in the aircraft list; and
responding to the first selection operation, updating the second region to display information of an aircraft selected by the user.

Another aspect of an embodiment of the present application provides an aircraft monitoring system, the aircraft monitoring system includes:
a display module configured to display a first user interface of an application, where a monitored aircraft list is displayed in a first region of the first user interface, and information of one aircraft in the aircraft list is displayed in a second region of the first user interface;
a receiving module configured to receive a first selection operation from a user in the aircraft list; and
a processing module configured to respond to the first selection operation, update the second region to display information of an aircraft selected by the user.

Yet another aspect of an embodiment of the present application provides an electronic device, the electronic device includes a memory and a processor connected to the memory; where the processor is configured to load and execute executable instructions to implement the user interface control method.

Still another aspect of an embodiment of the present application provides a computer-readable storage medium storing at least one instruction, at least one program, a code set, or an instruction set; the at least one instruction, the at least one program, the code set, or the instruction set is loaded and executed by the processor to implement the user interface control method.

### Beneficial Effects of the Invention

### Beneficial Effects

A user interface display method, monitoring system, device, and storage medium provided by an embodiment of the present application, by displaying the aircraft list and information of one aircraft therein in different regions of the user interface, when the selection operation from the user in the aircraft list is received, the update can be synchronized. On the one hand, it is convenient for users to directly obtain the specific information of the aircraft in the monitored state; on the other hand, it enhances the user experience.

### Brief Descriptions of the Drawings

### Descriptions of the Drawings

FIG. 1 is a schematic diagram of a user interface display method provided in an embodiment of the present invention.
FIG. 2 is a schematic diagram of a second user interface provided in an embodiment of the present invention.
FIG. 3 is a schematic diagram of a first user interface provided in an embodiment of the present invention.
FIG. 4 is a schematic diagram of a specific example of the first user interface provided in an embodiment of the present invention.
FIG. 5 is a schematic diagram of an aircraft monitoring system provided in an embodiment of the present invention.
FIG. 6 is a schematic diagram of an electronic device provided in an embodiment of the present invention.

The purpose, functional features, and advantages of the present application will be further described with reference to the embodiments and accompanying drawings.

### Implementation of Invention

### Embodiments of the Present Invention

It should be understood that the specific embodiments described herein are merely illustrative of the present application and are not intended to limit the present application.

The implementation of each embodiment of the present application will now be described with reference to the accompanying drawings. In the subsequent description, suffixes such as "module", "component" or "unit" used to represent elements are used only to facilitate the description of the present application.

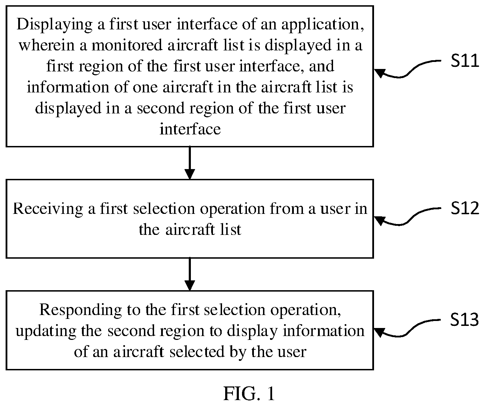

As shown in FIG. 1, the embodiment of the present application proposes a user interface control method which is provided for an aircraft monitoring system, the method includes: step S11, displaying a first user interface of an application, where a monitored aircraft list is displayed in a first region of the first user interface, and information of one aircraft in the aircraft list is displayed in a second region of the first user interface.

The information of the one aircraft includes an aircraft parameter and/or a monitoring screen. The aircraft parameter includes at least one of the following: sensor status, flight attitude, flight speed, altitude, flight time, power, and satellite information.

Step S12, receiving a first selection operation from a user in the aircraft list.

Step S13, responding to the first selection operation, updating the second region to display information of an aircraft selected by the user.

The embodiment of the present application displays the aircraft list and the information of one aircraft in different regions of the user interface. When receiving the selection operation from the user in the aircraft list, for example, the user selects an aircraft in the aircraft list that is different from the one currently displayed in the second region, the second region can be synchronously updated to display the information of the aircraft selected by the user, facilitating the user to intuitively access the aircraft information.

In one example, displaying the first user interface of the application further includes:
using a map as a background of the first user interface, and marking an actual geographical location of the one aircraft on the map.

Responding to the first selection operation further includes:
updating the map to mark the actual geographical location of the aircraft selected by the user.

In this example, by using a map as a background and marking the actual geographical location on the map, it is convenient for the user to intuitively obtain the location of the aircraft.

In an example, displaying the first user interface of the application further includes: displaying a monitoring screen of all aircraft in the aircraft list in a third region of the first user interface.
after displaying the monitoring screen of all the aircraft in the aircraft list in the third region of the first user interface, it further includes:
receiving a second selection operation from the user in the monitoring screen of all the aircraft; and
responding to the second selection operation, updating the second region to display the information of the aircraft selected by the user.

In this example, when receiving the selection operation from the user in the monitoring screen of all the aircraft, for instance, selecting the monitoring screen of an aircraft (different from the monitoring screen of the aircraft currently displayed in the second region), the second region can be synchronously updated to display the information of the aircraft selected by the user, facilitating the user to intuitively access the aircraft information.

In one example, displaying the first user interface of the application further includes:
displaying a location input box in a fourth region of the first user interface;
after displaying the first user interface of the application, further including:
   receiving a location input by the user in the location input box;
   receiving a search instruction from the user; and
   responding to the search instruction, updating the first region to display the aircraft list within a preset range of the location, and updating the second region to display the information of one aircraft in the aircraft list within the preset range of the location.

In this example, after receiving the location input from the user, the first region and the second region can be synchronously updated to display the aircraft list within the preset range of the location and the information of one aircraft therein.
In one example, after displaying the first user interface of the application, it further includes: receiving a one-key restore instruction from the user; and
responding to the one-key restore instruction, updating the first region to display the aircraft list at a preset location, and updating the second region to display the information of one aircraft in the aircraft list at the preset location.

In this example, after receiving the one-key restore instruction from the user, the first region and the second region can be synchronously updated to display the aircraft list at the preset location and the information of one aircraft therein. The preset location may be the departure point of all aircraft, such as a main control center.

In one example, before displaying the first user interface of the application, it further includes: displaying a second user interface of the application, where a login information input box is displayed in the second user interface;
receiving a login information input by the user in the login information input box;
receiving a login instruction from the user; and
responding to the login instruction from the user, verifying the login information and executing the step of displaying the first user interface of the application upon successful verification.

In this example, the step of verifying the login information and executing the step of displaying the first user interface of the application upon successful verification includes:
determining an authority level of the user based on the login information; and
displaying the aircraft list corresponding to the authority level of the user in the first region of the first user interface, according to the authority level of the user.

In this example, different users who have logged in have different authority levels and are able to view different aircraft lists. For example, a user with a higher authority level can view several aircraft under a specific model, while a user with a lower authority level can only view one aircraft under a specific model. For another example, after successfully logging in, user A can view a manned aircraft list that project group A is responsible for; user B, an industry application version of the aircraft list that project group B is responsible for; user C, a logistics version of the aircraft list that project group C is responsible for; and user D, a comprehensive list of all aircraft. Permissions can only be downward compatible, not upward compatible. For instance, a technician in project group B, after logging in, can view the aircraft corresponding to project B, as well as a certain aircraft that the technician is personally responsible for. Permissions can be deleted in a downward fashion but not in a upward fashion. For instance, user B can only delete the permissions of technicians in project group B. Ordinary technicians only have monitoring permissions and do not have deletion permissions. These settings for login and deletion permissions can improve the security of the monitoring platform.

It should be noted that the search instructions, one-key restore instructions, and login instructions from the user can be in various forms, such as the enter key after entering a location in the input box by the user, the button displayed next to the input box, the instructions generated by the user clicking the button, the voice instructions from the user, etc.

There are no restrictions on the position and size of different regions on the above interface. Upon entering the monitoring system interface, a map near the current device location, a map showing the original coordinate point (e.g., the map near the main control center), or a blank page may be displayed, allowing the user to make a selection.

In another example, considering the physical dimensions and resolution of the terminal interface, in order to clearly display the information presented in different regions, this solution can also present the content of different regions in the form of regional overlay, and allow zooming of the page/region through zoom controls (not limited to tools such as rollers or fingers). At the same time, the region displayed on the top layer is distinguished from other regions with effects such as highlighted borders, the entire region highlighted, or in a bubble form, etc.) to remind the user. The order of regional overlay is not fixed, and the region displayed on the top layer can be customized by the user, enhancing operational flexibility while reminding the user. Furthermore, when different contents are displayed in the form of regional overlay, a toolbar can be selectively displayed at the top/bottom/left/right corners of the terminal display interface. This toolbar contains multiple buttons, each corresponding to a different region. In this way, when the user needs to switch from the topmost region to display the content of a lower region, he/she can select the corresponding button in the toolbar, effectively preventing accidental touches when switching between different regions.

In still another example, considering the physical dimensions and resolution of the terminal interface, the reduced region can be presented in a side-by-side manner, and the page/region can be enlarged through zoom-in controls. Different regions can be visually distinguished from one another, improving the flexibility of operation while reminding users.

It should be noted that the content displayed on the specific monitoring platform can be customized, and multiple regions can be deleted or added as needed to make the monitoring platform more user-friendly and increase its flexibility. The above different examples can be freely selected, combined, and arranged.

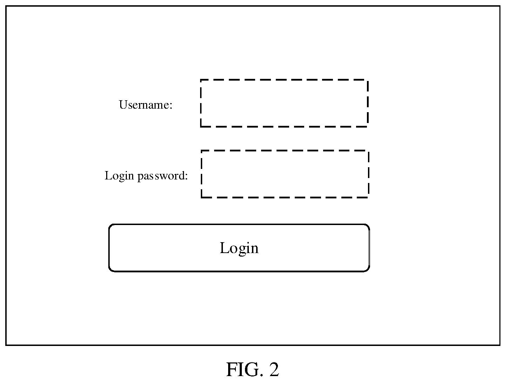

The following is an example description in combination with FIGS. 2-4:
As shown in FIG. 2, when the user opens the application, the user login interface is first displayed; the user can enter his/her username and login password in this interface.

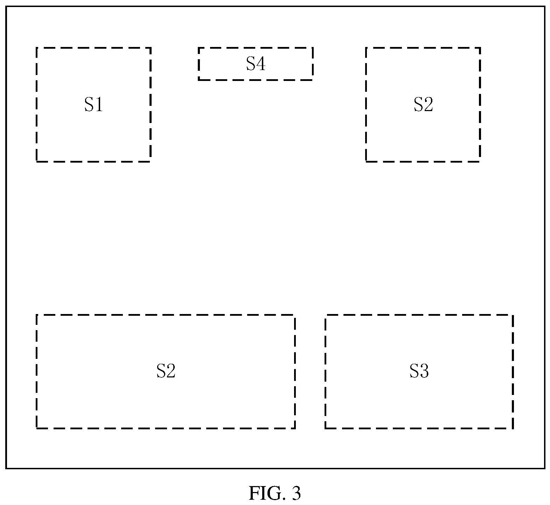

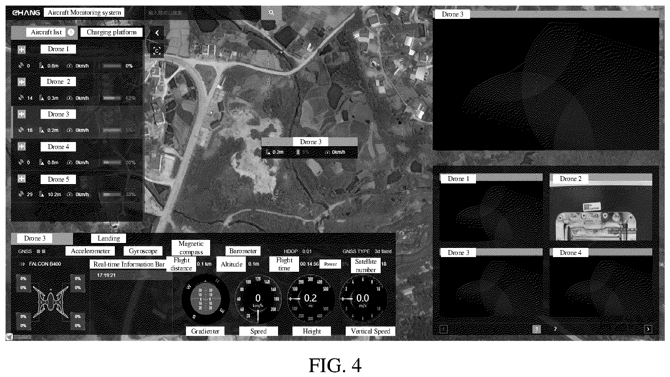

After the user clicks the "Login" button, if the username and login password are verified, the user interface shown in FIG. 3 is displayed. In this user interface, the first region S1 is set to display the monitored aircraft list. The second region S2 at the lower left is set for displaying parameter information of one aircraft in the aircraft list, while the second region S2 at the upper right is set to be the monitoring screen of the one aircraft. The third region S3 is set to display the monitoring screens of all aircraft in the aircraft list. The fourth region S4 is set to display the location input box and the search button. FIG. 4 provides a specific instance of FIG. 3.

In FIG. 4, after the user logs in, 5 aircraft (aircraft 1 to aircraft 5) are displayed in the first region S 1. As the user has selected aircraft 3, the parameter information of aircraft 3 is displayed in the second region S2 at the lower left, where the user can directly view the sensor status, flight attitude, flight speed, altitude, flight time, power, satellite information, etc. of aircraft 3. The monitoring screen of aircraft 3 is displayed in the second region S2 at the upper right, while the monitoring screens of aircraft 1 to aircraft 5 are displayed in the third region S3. The third region S3 also incorporates a slider control, through which the monitoring screens of aircraft 1 to aircraft 5 can be viewed. The background of the user interface is a map in which the actual geographical location of aircraft 3 is marked.

If the user selects "Aircraft 1" in the first area S1, the second area S2 at the lower left, the second area S2 at the upper right, and the background of the user interface will be synchronously updated to the information of "Aircraft 1".

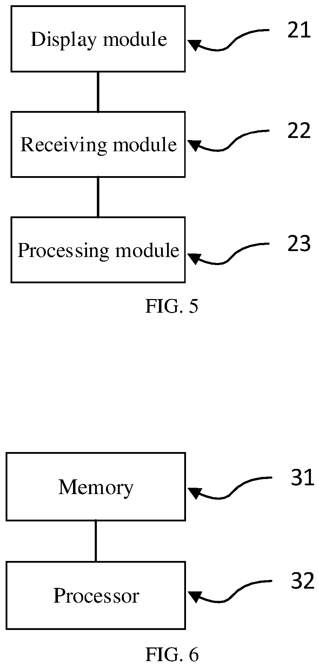

In the middle of the user interface, there are also a "location input box" and a "search" icon button. When the user enters a location, such as "Guangdong South Station", into the "location input box" and clicks the "search" icon button, the first region S1, the second area S2 at the lower left, the second area S2 at the upper right, and the background of the user interface will be synchronously updated. Specifically, the first region S1 will display the aircraft near "Guangdong South Station", and the second area S2 at the lower left, the second area S2 at the upper right, as well as the background of the user interface, will display information of one of the aircraft. As shown in FIG. 5, another embodiment of the present application also proposes an aircraft monitoring system, which includes:
a display module 21, configured to display a first user interface of an application, where a monitored aircraft list is displayed in a first region of the first user interface, and information of one aircraft in the aircraft list is displayed in a second region of the first user interface;
a receiving module 22, configured to receive a first selection operation from a user in the aircraft list; and
a processing module 23, configured to respond to the first selection operation, update the second region to display information of an aircraft selected by the user.

The data of the aircraft monitoring system will be fully recorded to form an aircraft historical flight log. This log can then be further analyzed (multi-dimensional data analysis, key aircraft parameters such as battery, vibration, various sensor values, satellite information, propeller speed differences, and power saturation). It enables monitoring of the operating status of an aircraft over a period of time, or the alarm conditions of different aircraft during that period.

As shown in FIG. 6, another embodiment of the present application also provides an electronic device, which includes: a memory 31; a processor 32 connected to the memory 31; where the processor 32 is configured to load and execute executable instructions to implement the aforementioned user interface control method.

The electronic device may be a terminal or a server.

Another embodiment of the present application provides a computer-readable storage medium, which stores at least one instruction, at least one program, a code set, or an instruction set. The at least one instruction, the at least one program, the code set, or the instruction set is loaded and executed by the processor to implement the aforementioned user interface control method.

Another embodiment of the present application provides a computer program product, which, when run on a computer, enables the computer to execute the user interface control method provided by the above-mentioned various method embodiments.

The above are merely exemplary embodiments of the present application and should not be construed as limiting the scope of the patent application. Any equivalent structures or processes derived from the content of the application's specification and drawings, as well as those directly or indirectly applied in other related technical fields, are similarly encompassed within the protection scope of the patent application.

### Practical Applications in Industry

A user interface display method, monitoring system, device, and storage medium provided by an embodiment of the present application, by displaying the aircraft list and information of one aircraft therein in different regions of the user interface, when the selection operation from the user in the aircraft list is received, the update can be synchronized. On the one hand, it is convenient for users to directly obtain the specific information of the aircraft in the monitored state; on the other hand, it enhances the user experience. As such, it possesses practical applications in the industrial setting.

## Claims

1. A user interface control method, provided for an aircraft monitoring system, the method comprising:
displaying a first user interface of an application, wherein a monitored aircraft list is displayed in a first region of the first user interface, and information of one aircraft in the aircraft list is displayed in a second region of the first user interface;
receiving a first selection operation from a user in the aircraft list; and
responding to the first selection operation, updating the second region to display information of an aircraft selected by the user.

2. The method of claim 1, wherein the information of the one aircraft comprises an aircraft parameter and/or a monitoring screen.

3. The method of claim 2, wherein the aircraft parameter comprises at least one of the following: sensor status, flight attitude, flight speed, altitude, flight time, power, and satellite information.

4. The method of any one of claims 1-3, wherein displaying the first user interface of the application further comprises:
using a map as a background of the first user interface, and marking an actual geographical location of the one aircraft on the map.

5. The method of any one of claims 1-4, wherein responding to the first selection operation further comprises:
updating the map to mark the actual geographical location of the aircraft selected by the user.

6. The method of any one of claims 1-5, wherein displaying the first user interface of the application further comprises:
displaying a monitoring screen of all aircraft in the aircraft list in a third region of the first user interface.

7. The method of claim 6, after displaying the monitoring screen of all the aircraft in the aircraft list in the third region of the first user interface, further comprising:
receiving a second selection operation from the user in the monitoring screen of all the aircraft; and
responding to the second selection operation, updating the second region to display the information of the aircraft selected by the user.

8. The method of any one of claims 1-7, displaying the first user interface of the application further comprises:
displaying a location input box in a fourth region of the first user interface;
after displaying the first user interface of the application, further comprising:
receiving a location input by the user in the location input box;
receiving a search instruction from the user; and
responding to the search instruction, updating the first region to display the aircraft list within a preset range of the location, and updating the second region to display the information of the one aircraft in the aircraft list within the preset range of the location.

9. The method of any one of claims 1-8, after displaying the first user interface of the application, further comprising:
receiving a one-key restore instruction from the user; and
responding to the one-key restore instruction, updating the first region to display the aircraft list at a preset location, and updating the second region to display the information of the one aircraft in the aircraft list at the preset location.

10. The method of any one of claims 1-9, before displaying the first user interface of the application, further comprising:
displaying a second user interface of the application, wherein a login information input box is displayed in the second user interface;
receiving a login information input by the user in the login information input box;
receiving a login instruction from the user; and
responding to the login instruction from the user, verifying the login information and executing the step of displaying the first user interface of the application upon successful verification.

11. The method of claim 10, wherein the step of verifying the login information and executing the step of displaying the first user interface of the application upon successful verification comprises:
determining an authority level of the user based on the login information; and
displaying the aircraft list corresponding to the authority level of the user in the first region of the first user interface, according to the authority level of the user.

12. An aircraft monitoring system, wherein the aircraft monitoring system comprises:
a display module configured to display a first user interface of an application, wherein a monitored aircraft list is displayed in a first region of the first user interface, and information of one aircraft in the aircraft list is displayed in a second region of the first user interface;
a receiving module configured to receive a first selection operation from a user in the aircraft list; and
a processing module configured to respond to the first selection operation, update the second region to display information of an aircraft selected by the user.

13. An electronic device comprising a memory and a processor connected to the memory; wherein the processor is configured to load and execute executable instructions to implement the user interface control method of any one of claims 1 to 11.

14. A computer-readable storage medium storing at least one instruction, at least one program, a code set, or an instruction set; the at least one instruction, the at least one program, the code set, or the instruction set is loaded and executed by a processor to implement the user interface control method of any one of claims 1 to 11.
